# EUROPEAN PATENT SPECIFICATION

(11) **EP 1 870 260 B1**
(45) Date of publication and mention of the grant of the patent: **26.08.2009**
(21) Application number: 07110334.5
(22) Date of filing: 15.06.2007
(51) Int. Cl.: B60C 11/24, B29D 30/58

(54) **Tire having wear indication means and a method of manufacturing the tire**
Reifen mit Verschleißanzeige und Herstellungsverfahren für diesen Reifen
Pneu comportant des supports d'indications d'usure et procédé de fabrication du pneu

(30) Priority: 22.06.2006 US 472594
(43) Date of publication of application: 26.12.2007
(73) Proprietor: The Goodyear Tire & Rubber Company, Akron, Ohio 44316-0001 (US)
(72) Inventor: Restrepo Posada, Carlos Santiago, Cali (CO); Montoya Villegas, Luis Fernando, Cali (CO); Santana Gonzalez, Alonso Arturo, Valle de la Ferreira Cali (CO); Plauny, Jeffrey Lee, Massillon, OH 44646 (US)
(74) Representative: Kutsch, Bernd

(56) References cited:
- EP-A1- 0 685 322
- DE-A1- 4 111 448
- DE-A1- 19 935 255
- DE-U1- 29 921 659
- FR-A- 2 201 983
- GB-A- 448 223
- GB-A- 2 243 584
- GB-A- 2 303 590
- JP-A- 59 011 903

## Description

### Field of the Invention

The present invention is directed to a tire and a method of manufacturing a tire. More specifically, the present invention is directed to a tire having an inclined wear indicator strip and a method of manufacturing a tire having a multi-colored strip built into the tire.

### Background of the Invention

The use of treadwear indicators is mandated by law in many countries. A variety of such indicators are known such as different colored rubber layers incorporated into the tread or colored fibers in layers located below the tread for a visual indicator of wear. Other types use tie-bar type elements in the tread grooves. Often, the upper surface of the tread wear indicator must be located at a height of 1.6 mm from the base of the groove in which the wear indicator is located.

The practical problem with the colored indicators of the type mentioned is that there is no way for the operator to determine the level of wear until the tire is worn and the buried colored rubber layer or colored fiber is finally exposed. When the tire employs the tie-bar type wear indicator, since the wear indicator is the same color as the remaining part of the tread, it can be difficult to determine the level of wear.

JP-A-59-11903 describes a pneumatic tire according to the preamble of claim 1.

DE 299 21 659U1 describes a vehicle tire wherein the tread comprises three layers with different colors.

### Summary of the Invention

The present invention is directed to a tire according to claim 1 having located within the tread structure, a visual tread wear indicator that provides a visual means of indicating the state of wear for the full tread depth. Also disclosed is a method of manufacturing a tire according to claim 4.

Disclosed herewith is a pneumatic tire comprising a tread, a belt structure, and a carcass, the tread having at least one groove. The tread has a groove depth Dg extending from an initial tread surface to the base of the groove. The tread is defined by a particular color; this color conventionally being considered black, though varying shades of black or very dark grey may define the tread color. The tread has at least one tread wear indicator, the tread wear indicator comprising three different colored portions. The different colors of the tread wear indicator differ from the tread color. The tread wear indicator is a strip inclined at an angle relative to the tread surface and extending to a depth Dr at least equivalent to the groove depth Dg.

The tread wear indicator strip has a defined length L and at least the radially outer portion of the strip, having a length of at least 50% of the length L of the strip, is formed from one of the three different colors.

The radially inner portion, having a length of at most 50% of the length L of the strip, is formed from two different colors.

The tread wear indicator strip is inclined at an angle of not more than 60° relative to the surface of the tread. Alternatively, the tread wear indicator strip may be inclined at an angle of 45° to 20° relative to the surface of the tread.

In another aspect of the invention, the tire has a rubber layer radially outward of the belt structure, this rubber layer not forming part of the tread. In such a tire construction, the tread wear indicator strip may extend to a depth Dr radially outward of the radially outer surface of the rubber layer.

Dependent claims cover preferred embodiments of the invention.

### Brief Description of the Drawings

The invention will be described by way of example and with reference to the accompanying drawings in which:
FIG. 1 is a cut perspective view of a tire illustrating the tread wear indicator;
FIG. 2 is a cross-sectional view of the tire;
FIG. 3 is a tread wear indicator strip;
FIG. 4 is a roll of rubber material to be used to form the tread wear indicators;
FIG. 5 is a cross-section view of the tire as it being assembled; and
FIG. 6 is a cut perspective view of a lugged tire having a tread wear indicator.

### Detailed Description of the Invention

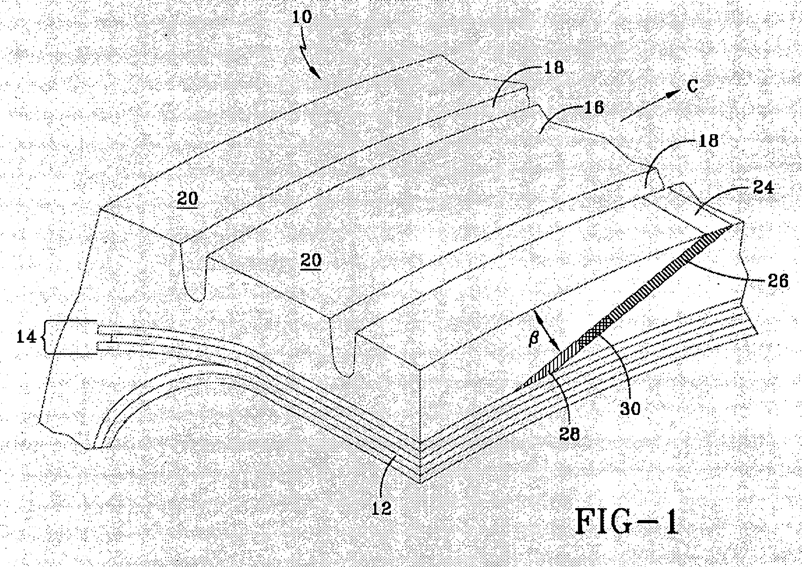

FIG. 1 illustrates a sectional view of a tire 10 in accordance with the present invention. The tire 10 has a carcass, formed of at least one ply 12 of reinforcing cords, a belt structure 14, having at least two plies of reinforcing cords located radially outward of the carcass reinforcing ply, and a tread 16 located radially outward of the belt structure. While the illustrated tread 16 has several circumferentially extending grooves 18 and ribs 20, the specific tread pattern is dependent upon the desired characteristics and use of the tire 10.

Located within the tread 16 is a tread wear indicator means. The tread wear indicator means is a strip of rubber 24 inclined at an angle β relative to the surface of the tread 16 and the circumferential direction C of the tire 10. The strip 24 has at least two portions along its length having colors different from the black color of the tread rubber. The configuration of the strip 24 is selected to have colors and a length to alert drivers to the wear level of the tire.

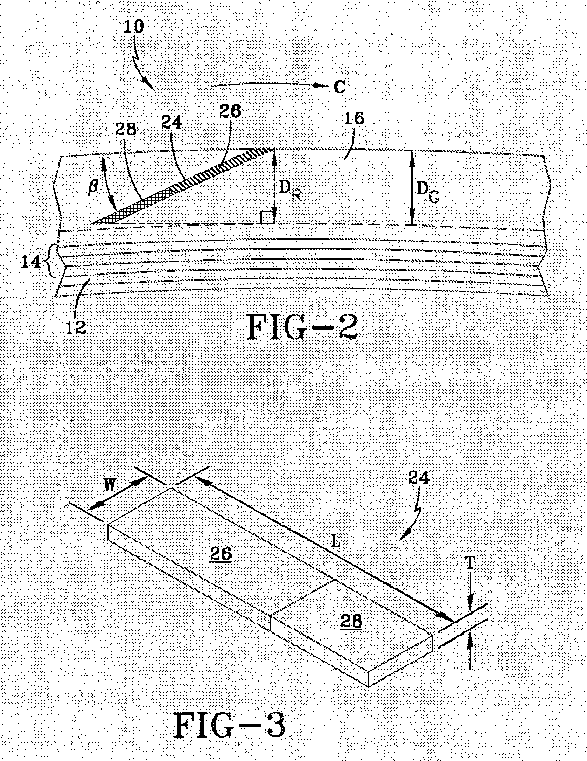

In the tire of FIG. 1, the strip 24 extends from the tread surface to the radially outer surface of the belt structure. At a minimum, the strip 24 has a length L so that it extends to a depth D_{R} that is at least equivalent to the groove depth D_{G} in the tread 16, see FIGS. 2 and 3. If the tire structure radially outward of the belt structure 14 includes at least one rubber layer that does not form part of the actual tread structure, such as a cushion layer or a tread base layer, the strip extends to a depth D_{R} radially outward of the radially outermost surface of the non-tread rubber layer. For such a construction, the strip 24 preferably extends to a depth D_{R} within the range of 95-105% of the depth of the rubber layer that forms the actual tread structure. Calculation of the length L can be made by using the approximation that the strip of rubber 24 forms the hypotenuse of a right angle triangle; the length L is then equal to the D_{R}/(sin β).

The strip 24 has at least two non-black colored portions 26, 28 along its length. If the strip has only two non-black colored portions, the radially outermost portion 26, having a length of at least 50%, preferably at least 60%, such as 60% to 80%, of the strip length L, will have a color indicating an acceptable tread depth to the vehicle operator. The selected color should indicate a "go" or "okay" and includes green, blue, or white, and any color selected can be a fluorescent or non-fluorescent color. Along the remaining length, forming the radially inner portion 28 of the strip 24, the color selected should be a color associated as a cautionary, warning, or stop color, such as yellow, orange, or red. Again, the color may be a fluorescent or non-fluorescent color.

If the strip 24 comprises three colors, at least the radially outermost portion 26, having a length of 45% - 65%, preferably 50% - 60%, of the strip length L, will have a color indicating an acceptable tread depth. The radially inner portion 28, having a length of at most 50% of the strip length, preferably at most 40%, is divided into two colors, wherein, preferably, the central colored portion 30 of the strip is a cautionary color, such as yellow or orange, and the radially innermost color is a stop color such as red. The relative lengths of the two radially inner colors may be equally divided, or have unequal lengths.

The strip 24 may comprise more than three colors, if so desired. The maximum number of colors is limited by the length of the strip and how many colors can be arranged along the length of the strip 24. One example of a more than three colors would be a gradual rainbow type shading. Additionally, the design tread depth and any legal limit on tread depth factor into a determination of the number and length of the different colored portions of the strip 24.

The inclination angle β of the strip 24 is preferably in the range of not more than 60° relative to the surface of the tire 10. Preferably, the inclination angle β is in the range 45° to 20° for passenger vehicle tires, 60° to 20° for truck tires, and 35° to 5° for specialty tires having a tread depth that is less than conventional for a passenger vehicle tire. As can be extrapolated from the above angle ranges, the thicker the tread, the larger the inclination angle permissible. This correlation occurs because of the manner in which the tire is manufactured, as discussed below.

FIG. 3 illustrates a single strip 24 to be used as the tread wear indicator in a tire. The strip has a length L, a width W, and a defined thickness T. The illustrated strip 24 is divided into two color portions 26, 28. Though the dimensions for the strip length L, width W, and thickness are selected based upon the size of the tire being manufactured, the strip will generally have a length L in the range of 30 to 80 mm, a width W in the range of 5 to 30 mm, and a thickness T in the range of 0.5 to 2.0 mm.

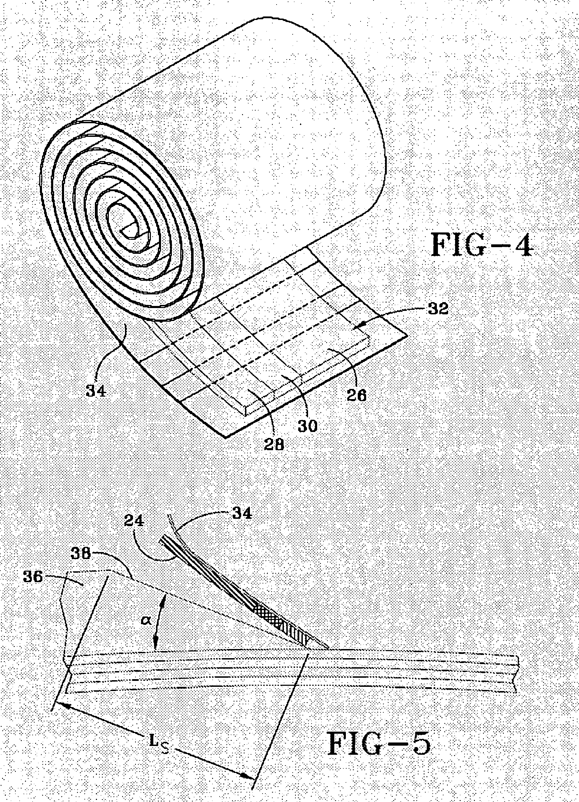

While the strips 24 may be manufactured individually, for ease of manufacturing, a length of material that can be divided into individual strips has greater manufacturing viability. FIG. 4 illustrates a roll of a length of material 32 useful for forming the individual wear indicator strips 24. The length of material 32 is an uncured, or partially cured, strip, having three different color portions 26, 28, 30. The length of material 32 is on a release sheet 34; the release sheet 34 preventing the uncured, or partially cured, material 32 from sticking to itself when in roll form. When using the material roll, a portion of the length of material 32 is cut to a width W to create the strip of FIG. 2.

The tire 10 may be formed in either a two stage build operation or a single stage build operation. The selection of build process may depend upon the type of tire being formed, or processing limitations of the plant.

For a two-stage build operation, during the first build stage the carcass structure of the tire, including reinforcing plies 12 turned around bead cores in the bead areas of the tire, and tire sidewalls, is formed. This carcass structure is expanded to create a green, or uncured, torodial structure. A pre-assembled belt structure 14 and tread is applied to the green carcass. This pre-assembled tread belt is built on a separate building drum. When assembling the tread belt, the uncured tread rubber 36 is applied and spliced to form a unitary circle of tread rubber.

For a single build stage operation, the entire tire is built on a single drum. The carcass structure of the tire is prepared on the drum, including reinforcing plies 12 turned around bead cores in the bead areas of the tire. The plies of the belt structure 14 are then applied. Next, the uncured tread rubber is applied and spliced to form a unitary circle of tread rubber. The rubber sidewalls may be applied either before or after the tread rubber depending on the build specifications of the tire. The fully assembled uncured tire is then removed from the building drum and is cured.

In accordance with the invention, after the tread rubber 36 is first applied to a building drum to the form the unitary circle of tread rubber, regardless of which type of tire building operation is employed, the tread wear indicator strip 24 is laid upon one of the splice cut edge 38 of the tread rubber 36, see FIG. 5 which shows application of the tread wear indicator during a single build stage operation. The splice cut edge 38 of the tread rubber 36 has a length L_{S} and is inclined relative to the radially inner surface of the tread rubber 36. The inclination angle a is not more than 60°, preferably in the range of 45° - 20°. The non-illustrated other splice cut edge of the tread rubber is a mirror image of the illustrated splice cut edge 38. While illustrated as being applied to the first splice cut edge 38 applied to the uncured tire, the tread wear indicator strip 24 may be applied to either splice cut edge. The inclination angle of the splice cut edges creates the corresponding inclination of the tread wear indicator strip 24 in the cured tire 10.

If the tread wear indicator strip 24 is cut from a roll of material 32 and the release sheet 34 is also cut with the wear indicator strip 24, the release sheet 34 can be used to aid positioning of the strip 24 upon the splice cut edge 38. After the strip 24 is located where desired, the release sheet 34 is removed. After the tread wear indicator strip 24 is applied to the cut edge, the uncured tread rubber 36 is fully wound upon the uncured tire and the second splice cut edge, having a cut edge corresponding to the first splice cut edge, is matched up to the first splice cut edge 38. The cut edges are then spliced in any conventional manner to form a unitary circle of rubber on the uncured tire. The result is that the tread wear indicator strip 24 is held, or located, within the tread rubber splice. The tire is then cured.

FIG. 5 illustrates only a single tread wear indicator strip 24 being placed in the tread splice; however, multiple tread wear strips 24 may be placed in the splice. The number of wear indicators in a single tread splice is in the range of one to five, with a preferred number of indicators being two or three indicators evenly spaced from each other along the lateral width of the tire tread 16.

While a single splice is typical for tread application in tires, to provide tread wear indicators in more than one location along the tire circumferential length, either the tread rubber stock may be provided with multiple splices along the tire circumferential length, or slices may be made in the applied tread stock that allow the builder to insert a tread wear indicator strip into the uncured tread rubber. When multiple tread wear indicators in the tire are desired, a preferred number of wear indicators is at least three indicators spaced relatively equally along the circumferential length of the tire.

To ensure bonding of the tread wear indicator strip in the tire, preferably the tread wear strip 24 is formed from rubber. Any suitable rubber may be used, and ideally will have a base elastomeric blend similar or highly compatible with the rubber forming the tread. Use of an additional adhesive, such as those used in retreading procedures, may also be used to secure bonding of the tread wear indicator strip 24 in the tire 10. However, the strip may also be formed from other materials that can be placed and held within the tread splice; the primary requirement of such a material being that it be capable of being adhesively bonded to the tread rubber and not destroy the integrity of the tread splice in the cured tire 10.

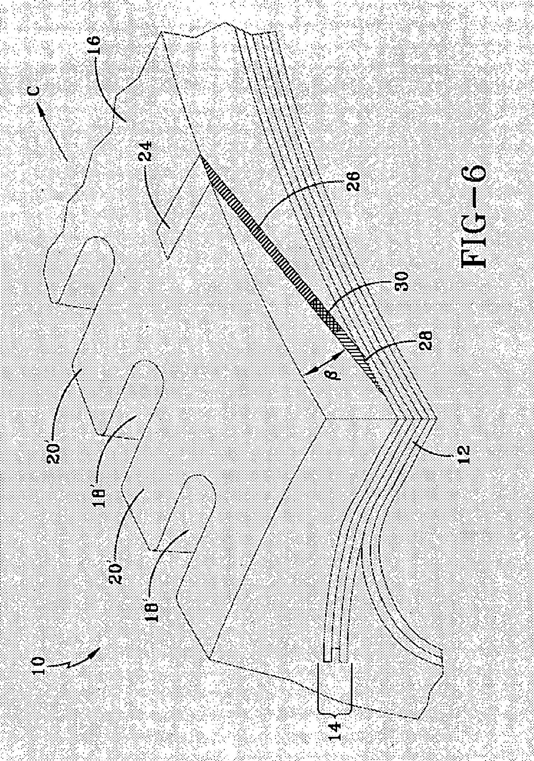

FIG. 6 illustrates the use of the tread wear indicator 24 in a tire 10 wherein the tread 16 is provided with a plurality of laterally extending lug grooves 18' forming lugs 20'. The illustrated tread wear indicator 24 extends laterally across the tread from the tread edge to an internal tread location.

Rather than having a wear indictor that is only visible once tread wear begins to reach an unacceptable level, the present invention will provide vehicle operators with a visual continual notice as to the level of tread wear of their tires.

## Claims

1. A pneumatic tire comprising a tread (16), a belt structure (14), and a carcass, the tread (16) having at least one groove (18) having a groove depth (D_{G}) extending from an initial tread surface to the base of the groove (18), and a tread color, the tread (16) comprising at least one tread wear indicator (24), the tread wear indicator comprising at least two different colored portions (26, 28, 30), the at least two different colors differing from the tread color, wherein the tread wear indicator (24) is a material strip, the material strip being inclined at an angle (β) relative to the tread surface and extending to a depth (D_{R}) at least equivalent to the groove depth (D_{G}), **characterized in that** the tread wear indicator strip (24) is inclined at an angle (β) of not more than 60° relative to the surface of the tread (16), and **in that** the tread wear indicator strip (24) has a length (L) and at least the radially outer portion having a length of at least 50% of the length (L) of the strip (24) is formed from one of the at least two different colors and the radially inner portion having a length of at most 50% of the length of the strip is formed from two different colors, the strip (24) having three different colors.

2. The tire of claim 1 wherein the tread wear indicator strip (24) is inclined at an angle of 45° to 20° relative to the surface of the tread.

3. The tire of claim 1 or 2 wherein the tire further comprises a rubber layer radially outward of the belt structure, the rubber layer not forming part of the tread, and wherein the tread wear indicator strip (24) extends to a depth (D_{R}) radially outward of the radially outer surface of the rubber layer.

4. A method of manufacturing a tire, the tire comprising a tread (16), a belt structure (14), and a carcass, the tread having a tread color and at least one tread wear indicator, the method of manufacturing comprising the following steps:
assembling the carcass,
assembling the belt structure (14) to the outer surface of the carcass,
applying a tread rubber outward of the belt structure, the tread rubber having a first and second splice cut edge (38),
splicing the tread rubber to form a unitary circle of tread rubber, and
curing the tire (10),
**characterized in that**, prior to splicing the tread rubber, the method has the further step of applying at least one tread wear indicator strip (24) to a splice cut edge of the tread rubber such that, after splicing the tread rubber, the tread wear indicator strip (24) is located within the tread splice.

5. The method of claim 4 wherein the first and second splice cut edges of the tread rubber are inclined at an angle (β) of less than 60° relative to the radially inner surface of the tread rubber.

6. The method of claim 4 or 5 wherein the tread wear indicator strip (24) has a length (L) in the range of 95-105% of the length of the splice cut edges of the tread (16) and/or wherein one to three tread wear indicator strips (24) are applied to the first splice cut edge of the tread rubber.

7. The method of at least one of the claims 4-6, further comprising the step of providing multiple splices along the circumferential length of the tread rubber, and placing at least one tread wear indicator strip (24) in each splice.

## Patentansprüche

1. Luftreifen, umfassend eine Lauffläche (16), eine Gürtelstruktur (14) und eine Karkasse, wobei die Lauffläche (16) mindestens eine Rille (18) aufweist, die eine Rillentiefe (D_{G}) hat, die von einer anfänglichen Profiloberfläche zum Grund der Rille (18) verläuft, und eine Laufflächenfarbe, wobei die Lauffläche (16) mindestens einen Profilverschleißindikator (24) umfasst, wobei der Profilverschleißindikator mindestens zwei verschieden gefärbte Teile (26, 28, 30) umfasst, wobei die mindestens zwei verschiedenen Farben von der Laufflächenfarbe verschieden sind, wobei der Profilverschleißindikator (24) ein Materialstreifen ist, wobei der Materialstreifen in einem Winkel (β) bezüglich der Profiloberfläche geneigt ist und sich bis zu einer Tiefe (D_{R}) erstreckt, die mindestens äquivalent zur Rillentiefe (D_{G}) ist, **dadurch gekennzeichnet, dass** der Profilverschleißindikatorstreifen (24) in einem Winkel (β) von nicht mehr als 60° bezüglich der Oberfläche der Lauffläche (16) geneigt ist und dass der Profilverschleißindikatorstreifen (24) eine Länge (L) hat und mindestens der radial äußere Teil, der eine Länge von mindestens 50% der Länge (L) des Streifens (24) hat, aus einer der mindestens zwei verschiedenen Farben gebildet ist und der radial innere Teil, der eine Länge von höchstens 50% der Länge des Streifens hat, aus zwei verschiedenen Farben gebildet ist, wobei der Streifen (24) drei verschiedene Farben hat.

2. Reifen nach Anspruch 1, wobei der Profilverschleißindikatorstreifen (24) in einem Winkel von 45° bis 20° bezüglich der Oberfläche der Lauffläche geneigt ist.

3. Reifen nach Anspruch 1 oder 2, wobei der Reifen weiter eine Gummilage radial auswärts von der Gürtelstruktur umfasst, wobei die Gummilage keinen Teil der Lauffläche bildet, und wobei der Profilverschleißindikatorstreifen (24) sich bis zu einer Tiefe (D_{R}) radial auswärts von der radial äußeren Oberfläche der Gummilage erstreckt.

4. Verfahren zur Herstellung eines Reifens, wobei der Reifen eine Lauffläche (16), eine Gürtelstruktur (14) und eine Karkasse umfasst, wobei die Lauffläche eine Laufflächenfarbe und mindestens einen Profilverschleißindikator aufweist, wobei das Herstellungsverfahren die folgenden Schritte umfasst:
Zusammenstellen der Karkasse,
Anfügen der Gürtelstruktur (14) an die Außenfläche der Karkasse,
Anbringen eines Laufflächengummis auswärts von der Gürtelstruktur, wobei der Laufflächengummi eine erste und eine zweite Spleißschnittkante (38) aufweist,
Spleißen des Laufflächengummis zur Bildung eines einheitlichen Laufflächengummikreises und Vulkanisieren des Reifens (10),
**dadurch gekennzeichnet, dass** vor dem Spleißen des Laufflächengummis das Verfahren den weiteren Schritt des Anbringens mindestens eines Profilverschleißindikatorstreifens (24) an einer Spleißschnittkante des Laufflächengummis aufweist, sodass der Profilverschleißindikatorstreifen (24) sich nach dem Spleißen des Laufflächengummis in der Laufflächenspleißstelle befindet.

5. Verfahren nach Anspruch 4, wobei die erste und die zweite Spleißschnittkante des Laufflächengummis in einem Winkel (β) von weniger als 60° bezüglich der radial inneren Oberfläche des Laufflächengummis geneigt sind.

6. Verfahren nach Anspruch 4 oder 5, wobei der Profilverschleißindikatorstreifen (24) eine Länge (L) im Bereich von 95-105% der Länge der Spleißschnittkanten der Lauffläche (16) aufweist und/oder wobei ein bis drei Profilverschleißindikatorstreifen (24) an der ersten Spleißschnittkante des Laufflächengummis angebracht werden.

7. Verfahren nach mindestens einem der Ansprüche 4-6, weiter den Schritt des Vorsehens mehrerer Spleißstellen entlang der Umfangslänge des Laufflächengummis und Plazierens mindestens eines Profilverschleißindikatorstreifens (24) in jeder Spleißstelle umfassend.

## Revendications

1. Bandage pneumatique comprenant une bande de roulement (16), une structure de ceinture (14) et une carcasse, la bande de roulement (16) possédant au moins une rainure (18) possédant une profondeur de rainure (D_{G}) s'étendant depuis une surface de bande de roulement initiale jusqu'à la base de la rainure (18), et une couleur de bande de roulement, la bande de roulement (16) comprenant au moins un indicateur d'usure de bande de roulement (24), l'indicateur d'usure de bande de roulement comprenant au moins deux portions (26, 28, 30) différemment colorées, lesdites au moins deux couleurs différentes étant différentes de la couleur de la bande de roulement, l'indicateur d'usure de bande de roulement (24) représentant une bande de matière, la bande de matière étant inclinée en formant un angle (β) par rapport à la surface de bande de roulement et s'étendant jusqu'à une profondeur (D_{R}) au moins équivalente à la profondeur de rainure (D_{G}), **caractérisé en ce que** la bande indicatrice d'usure de bande de roulement (24) est inclinée en formant un angle (β) qui n'est pas supérieur à 60° par rapport à la surface de la bande de roulement (16), et **en ce que** la bande indicatrice d'usure de bande de roulement (24) possède une longueur (L) et au moins la portion externe en direction radiale possédant une longueur qui représente au moins 50 % de la longueur (L) de la bande (24) est formée à partir d'une desdites au moins deux différentes couleurs, et la portion interne en direction radiale possédant une longueur qui représente au maximum 50 % de la longueur de la bande est formée à partir de deux couleurs différentes, la bande (24) possédant trois couleurs différentes.

2. Bandage pneumatique selon la revendication 1, dans lequel la bande indicatrice d'usure de bande de roulement (24) est inclinée en formant un angle de 45° à 20° par rapport à la surface de la bande de roulement.

3. Bandage pneumatique selon la revendication 1 ou 2, dans lequel le bandage pneumatique comprend en outre une couche de caoutchouc à l'extérieur de la structure de ceinture en direction radiale, la couche de caoutchouc ne faisant pas partie de la bande de roulement, et dans lequel la bande indicatrice d'usure de bande de roulement (24) s'étend jusqu'à une profondeur (D_{R}) à l'extérieur, en direction radiale, la surface externe, en direction radiale, de la couche de caoutchouc.

4. Procédé de confection de bandage pneumatique, le bandage pneumatique comprenant une bande de roulement (16), une structure de ceinture (14), et une carcasse, la bande de roulement possédant une couleur de bande de roulement et au moins un indicateur d'usure de bande de roulement, le procédé de confection comprenant les étapes suivantes consistant à :
assembler la carcasse ;
assembler la structure de ceinture (14) à la surface externe de la carcasse ;
appliquer un caoutchouc de bande de roulement à l'extérieur de la structure de ceinture, le caoutchouc de bande de roulement possédant un premier et un deuxième bord découpé pour l'épissage (38) ;
joindre le caoutchouc de bande de roulement par épissage pour obtenir un cercle unitaire de caoutchouc de bande de roulement ; et
vulcaniser le bandage pneumatique (10),
**caractérisé en ce que,** avant de procéder à l'épissage du caoutchouc de bande de roulement, le procédé comprend l'étape supplémentaire consistant à appliquer au moins une bande indicatrice d'usure de bande de roulement (24) sur un bord découpé pour l'épissage.

5. Procédé selon la revendication 4, dans lequel les premier et deuxième bords découpés du caoutchouc de la bande de roulement pour l'épissage sont inclinés en formant un angle (β) inférieur à 60° par rapport à la surface interne du caoutchouc de bande de roulement, en direction radiale.

6. Procédé selon la revendication 4 ou 5, dans lequel la bande indicatrice d'usure de bande de roulement (24) possède une longueur (L) dans la plage de 95 à 105 % de la longueur des bords découpés de bande de roulement pour l'épissage et/ou dans lequel on applique de une à trois bandes indicatrices d'usure de bande de roulement (24) sur le premier bord découpé du caoutchouc de la bande de roulement pour l'épissage.

7. Procédé selon au moins une des revendications 4 à 6, comprenant en outre l'étape consistant à procurer plusieurs épissages sur la longueur circonférentielle du caoutchouc de bande de roulement, et à placer au moins une bande indicatrice d'usure de bande de roulement (24) dans chaque épissage.
